# EUROPEAN PATENT APPLICATION

(11) **EP 1 834 750 A2**
(43) Date of publication of application: **19.09.2007**
(21) Application number: 06126303.4
(22) Date of filing: 18.12.2006
(51) Int. Cl.: B29C 37/02, B29C 69/00, B29C 69/02, B29C 31/00

(54) **Orientation and transport device for caps, in particular synthetic caps**

(30) Priority: 24.02.2006 WO PCT/IT2006/000106
(71) Applicant: Capuzzi System S.r.l., 25010 Brescia (IT)
(72) Inventor: CAPUZZI, Claudio, 25125, Brescia (IT)
(74) Representative: Crippa, Paolo Ernesto

(57) **Abstract**

The object of the present invention is an orientation and transport device of an apparatus cylinders (10, 16) for the correct orientation of the semi-finished caps and a chain (30) having overlapped rows of seats, for the piled transport of the semi-finished caps towards a punching zone.

## Description

The present invention refers to an orientation and transport device for caps of an apparatus for picking up and punching said caps.

In particular, the object of the present invention is an orientation and transport device of an apparatus for picking up and punching synthetic caps, of the type usually made of cork and used for wine bottles.

The production of synthetic caps has undergone considerable increase over the last years, essentially due to the low production costs, if compared to those of corks, to the wide availability of raw materials and, last but not least, to the fact that the plastic material is virtually inert relative to the wine contained in the bottle.

On the other hand, a process for producing synthetic caps by extrusion is very effective, wherein a production device produces a cord comprised of a succession of substantially cylindrical elements connected to each other by a tang. The cord is then cut by a cutting device, making a semi-finished cap consisting of the cylindrical element and of two fragments of tang, which protrude from the cylindrical element, at the ends thereof.

To remove the tang fragments, a hot punching process of the semi-finished cap is required. In brief, the semi-finished cap is subject to heating and compression between two pistons, so that the tang fragments are compressed in the cylindrical element, virtually disappearing. In the jargon, said process is called "healing".

Each semi-finished cap must then be picked up from a set of semi-finished caps arranged anyhow, for example into containers arriving from the production device, properly oriented and carried between two pistons for punching.

Such process therefore is long and difficult and requires suitable orientation and transport devices for the semi-finished caps for allowing quick production of a large number of caps, as required by the current requirements of this field.

The object of the present invention is to provide an orientation and transport device of semi-finished caps which should allow carrying out a punching process at high production speeds.

Such object is achieved by a device according to the following claim 1. The dependent claims describe embodiment variations.

The features and advantages of the orientation and transport device according to the present invention will appear more clearly from the following description, made by way of an indicative and non-limiting example with reference to the annexed figures, wherein:

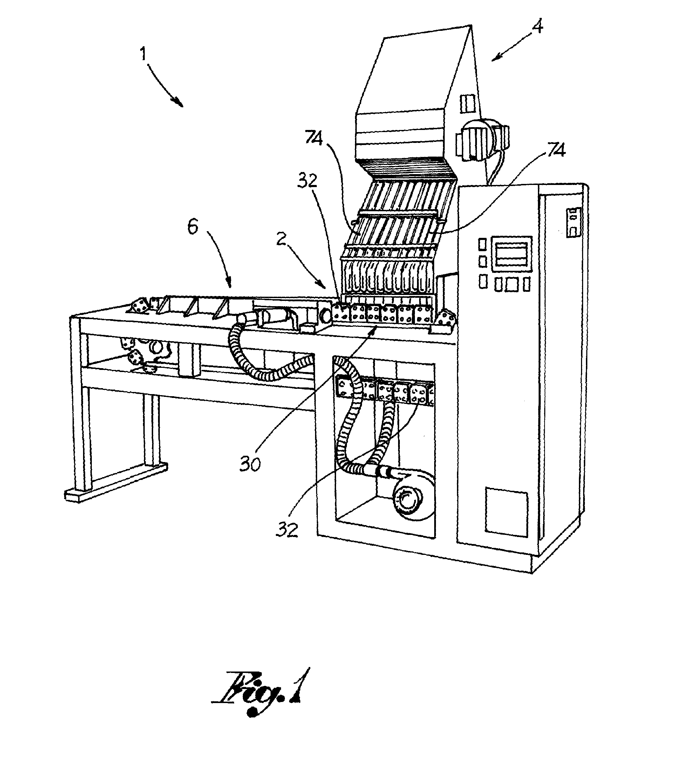

-figure 1 shows a schematic perspective view of an apparatus for picking up and punching synthetic caps, comprising an orientation and transport device according to the present invention;

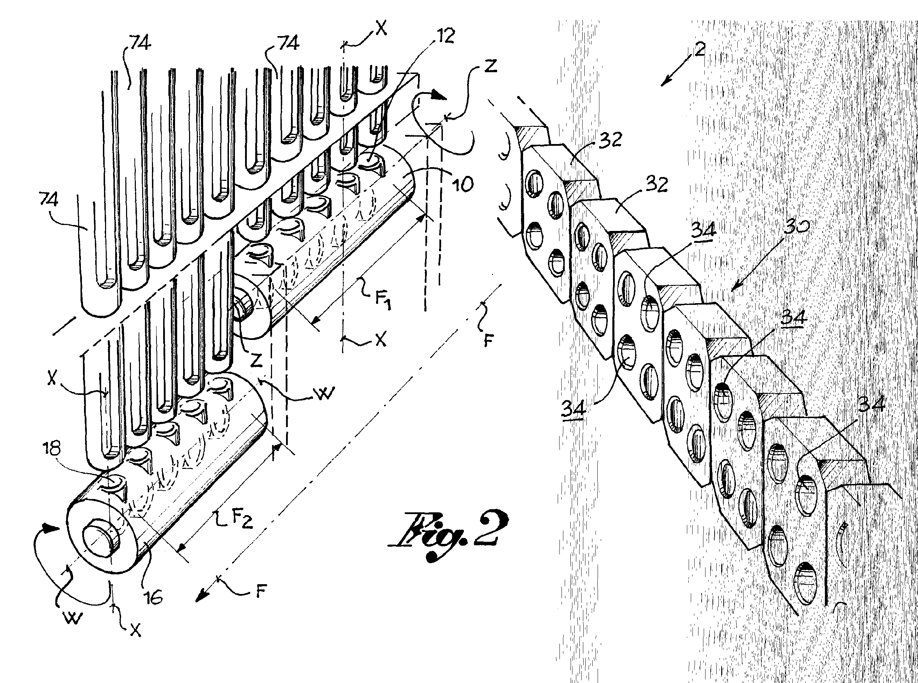

- figure 2 shows a schematic perspective exploded view of the orientation and transport means of the orientation and transport device of figure 1;

- figures 3a and 3b show an operating diagram of the orientation means of figure 2;

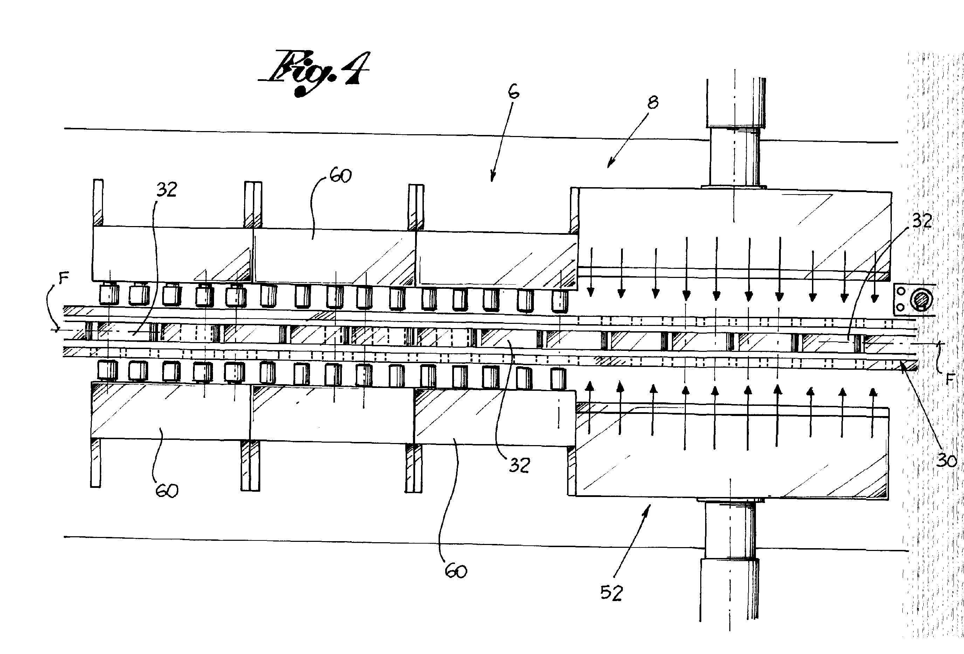

- figure 4 shows a top plan view of transport means and of a punching device of the apparatus of figure 1, and

- figure 5 shows an operating diagram of the locking means and of the release means of the transport means of the orientation and transport device of figure 1.

With reference to the annexed figures, reference numeral 1 globally denotes an apparatus for picking up and punching semi-finished caps.

Apparatus 1 comprises an orientation and transport device 2, a feeding device 4, upstream of said orientation and transport device 2, suitable for feeding said orientation and transport device 2 with an aligned array of semi-finished elements parallel to each other, and a punching device 6, downstream of said orientation and transport device 2, suitable for carrying out a punching of said semi-finished elements for obtaining finished elements.

The semi-finished elements parallel to each other that make the aligned array are arranged aligned according to a first direction of orientation X-X. In other words, said semi-finished elements, substantially identical to one another, exhibit each a main axis of prevailing extension; said semi-finished elements are aligned so that all the main axes are parallel to one another. Preferably, moreover, said main axes are also substantially coplanar, that is, lying on a same geometrical plane.

Moreover, said punching device exhibits a punching zone 8 for carrying out said punching.

Moreover, the orientation and transport device 2 comprises orientation means suitable for seating said aligned array according to said first direction of orientation X-X and suitable for orientating said aligned array according to a second direction of orientation Y-Y, obtaining an oriented array of semi-finished elements.

Moreover, the orientation and transport device 2 comprises transport means suitable for seating said oriented array and suitable for transporting said oriented array to said punching zone 8.

The orientation means are suitable for separating said aligned array into a first row F1 of aligned elements and a second row F2 of aligned elements arranged at different heights relative to a reference plane, for feeding said oriented array into overlapped rows to said transport means.

Preferably, said orientation means are suitable for rotating said aligned array for orientating said semi-finished elements according to said second direction of orientation Y-Y.

According to an embodiment variation, said orientation means are suitable for rotating according to a single direction of rotation.

Preferably, said orientation means are suitable for alternately rotating in clockwise and counter clockwise direction.

According to a preferred embodiment, the orientation means comprise a first cylinder 10 having a first axis of rotation Z-Z and a first row of seats 12 suitable for seating said semi-finished elements in abutment with a seat bottom 14, and a second cylinder 16 having a second axis of rotation W-W and a second row of seats 18 suitable for seating said semi-finished elements in abutment with a seat bottom 20.

Cylinders 10, 16 are suitable for switching from a loading configuration, wherein they cooperate with the feeding device for receiving said aligned array, to an unloading configuration, wherein they cooperate with the transport means for feeding the oriented array thereto.

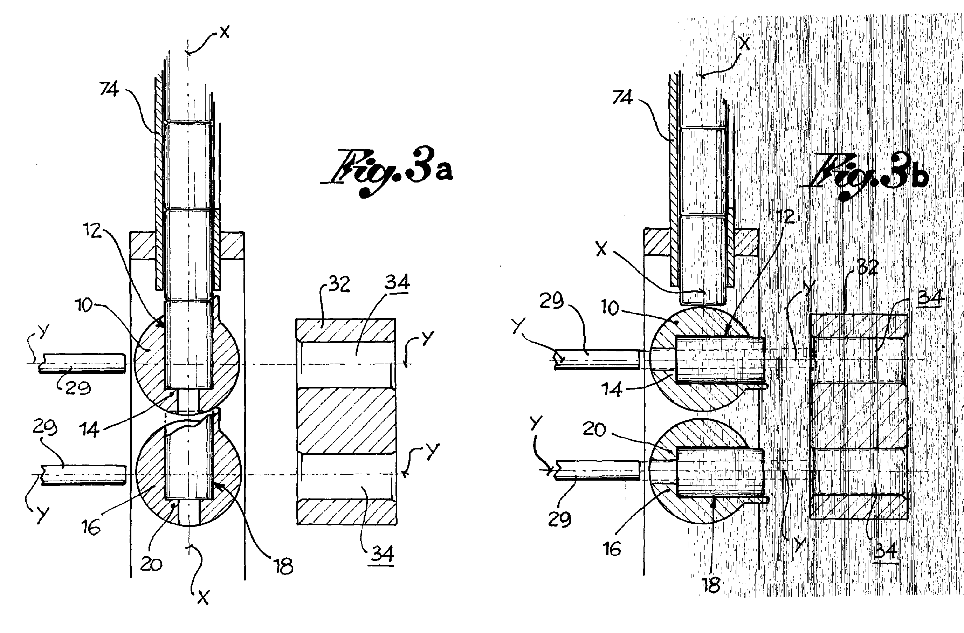

In the loading configuration, the seat bottoms 14 of the first row of seats 12 and the seat bottoms 20 of the second row of seats 18 are arranged at different heights relative to said reference plane (figure 3a).

Preferably, said transport means, proceeding from said orientation means towards said punching zone 8, define an advance direction F-F. Said orientation means are suitable for separating said aligned array into said first row F1 of aligned elements and said second row of aligned elements, so that such rows F1, F2 are arranged side by side along said advance direction F-F.

Moreover, according to a preferred embodiment, said first cylinder 10 and said second cylinder 16 are side by side along said advance direction F-F.

According to a preferred embodiment, the orientation and transport device further comprises pushing means suitable for cooperating with said orientation means for feeding said oriented array to said transport means.

For example, the pushing means comprise at least one punch 29 suitable for shifting along a direction parallel to said second direction of orientation Y-Y and suitable for penetrating into said seats 12, 18 of cylinders 10, 16 from the end of the respective bottoms 14, 20 for pushing the semi-finished elements seated therein towards said transport means (figure 3b).

Preferably, said transport means comprise a closed chain 30 for carrying the semi-finished elements from a loading zone, wherein said transport means cooperate with said orientation means, to said punching zone 8.

According to a preferred embodiment, the closed chain 30 comprises a plurality of modules 32 suitable for seating said semi-finished elements. In particular, each module 32 exhibits a plurality of transport seats 34 organised into overlapped rows relative to said reference plane.

Preferably, said transport seats 34 are holes through said modules 32 of chain 30. Said holes exhibit respective bottom axes parallel, in said loading zone, with said second direction of orientation Y-Y of the oriented array.

According to a preferred embodiment, said transport means further comprise locking means suitable for retaining said semi-finished elements.

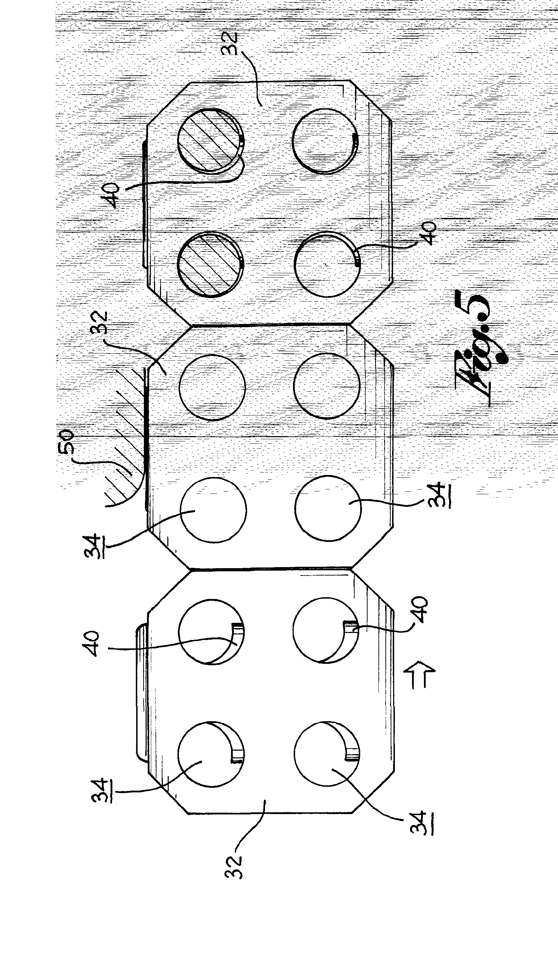

Preferably, said locking means comprise a pushing element 40, arranged in each module 32 of chain 30, constantly influenced for pushing said semi-finished element seated in said module 32 against the wall of said module 32, for retaining it (figure 5).

According to a preferred embodiment, said transport means comprise release means suitable for deactivating said locking means, for allowing the seating of said oriented array into said transport means.

Preferably, said first release means comprise a fixed abutment 50, at least partly arranged into said loading zone, suitable for influencing said pushing element 40 for freeing access of the semi-finished element to said transport seats 34.

According to a preferred embodiment, said orientation and transport device further comprises ejection means suitable for cooperating with said transport means for ejecting said finished elements. In particular, said ejection means cooperate with said transport means in an ejection zone.

Preferably, said ejection means comprise at least one punch suitable for alternately shifting along said second direction of orientation Y-Y and for pushing said finished elements out of said transport seats 34.

According to a preferred embodiment, said transport means further comprise second release means, suitable for cooperating with said transport means in said ejection zone and suitable for deactivating said locking means, for allowing the ejection of said finished elements.

Preferably, said second release means comprise a further fixed abutment, at least partly arranged into said ejection zone, suitable for influencing said pushing element 40 for disengaging said finished elements from said transport seats 34.

Once the oriented array is inserted in overlapped rows into the transport seats 34 of chain 30, the oriented elements are carried towards said punching device.

Preferably, said punching device comprises at least one heating station 52, for heating said semi-finished elements, and at least one punching station 60.

Preferably, said heating station 50 is upstream of said punching station 60.

Preferably, said punching station comprises at least one pair of opposite pistons, between which said transport means are arranged. In other words, the semi-finished elements carried on chain 30, pass between said opposite pistons.

Preferably, at least one punching station comprises heated pistons.

Preferably, moreover, at least one further punching station comprises cooled pistons.

The semi-finished elements are fed to the orientation and transport device 2 by said feeding device 4.

The feeding device 4 comprises, according to a preferred embodiment, a container for containing said semi-finished elements in bulk.

Moreover, said feeding device comprises lifting means for lifting said elements in bulk up to a predetermined height.

For example, said lifting means comprise a lifting belt provided with projections against which the semi-finished elements abut and are lifted up to the desired height.

Moreover, said feeding device comprises separation means for separating said elements in bulk into single elements. For example, said separation means comprise a vibrating device that allows channelling said semi-finished elements individually towards ducts that carry them to said orientation and transport device.

Moreover, said feeding device comprises means for feeding said single elements to said orientation means of the orientation and transport device.

For example, said feeding means comprise a plurality of pipes 74 suitable for feeding said single semi-finished elements to said orientation means according to said first direction of orientation X-X.

In the standard operation of the apparatus, the semi-finished elements in bulk are loaded in the container of the feeding device 4, lifted by the lifting belt up to a separation chamber and by vibration, individually sent towards said pipes 74.

For clarity of description, let's suppose that the feeding device is provided with ten pipes 74, having an end portion, close to the orientation and transport device 2, substantially oriented according to said first direction of orientation X-X.

The semi-finished elements are channelled towards pipes 74 and pass inside them, dropping downwards, thus reaching cylinders 10, 16 of the orientation and transport device 2, in position aligned with said first direction of orientation X-X.

The first and the second cylinder 10, 16 are arranged in the loading direction, that is, with the relevant seats 12, 18 aligned with the outlet of pipes 74, to be fed thereby (figure 3a).

The first five pipes feed five semi-finished elements to the first cylinder 10; said first five semi-finished elements make the first row F1, whose elements are arranged at a first height.

The further five pipes feed five semi-finished elements to the second cylinder 16; said further five semi-finished elements make the second row F2, whose elements are arranged at a second height, for example lower than the first height.

For facilitating the feeding to the cylinders, pipers 74 exhibit end portions of different length.

The first and the second cylinder 10, 16 carry out a rotation, so as to move to the unloading configuration, wherein seats 12, 18 are oriented according to the second direction of orientation Y-Y (figure 3b).

By virtue of such rotation, the first row F1 of semi-finished elements exhibits coplanar axes and lying on a first plane and the second row F2 of semi-finished elements exhibits coplanar axes and lying on a second plane, arranged below the first plane.

By actuating said pushing means, the oriented semi-finished elements are pushed out of seats 12, 18 of cylinders 10, 16 and inserted, into overlapped rows, in the transport seats 34 of chain 30 that face said seats 12, 18 of cylinders 10, 16.

Since cylinders 10, 16 are side by side along the advance direction F-F of chain 30, the first row F1 of oriented semi-finished elements is inserted in an upper row of transport seats 34 and the second row F2 of oriented semi-finished elements is inserted in a lower row of transport seats 34, the upper row being side by side along said advance direction with the lower row.

Once a first oriented array has thus been loaded, divided into two rows F1, F2 at different and side by side heights, chain 30 advances by a portion corresponding to the length occupied by a single row of oriented elements.

Meanwhile, cylinders 10, 16 have switched from the unloading configuration to the loading one, have been fed with a further aligned array of elements, and have switched from the loading configuration to the unloading one, obtaining a further oriented array of elements, arranged on rows side by side and at different heights.

The further oriented array of elements is loaded on chain 30, filling all transport seats 34 of the portion of chain 30 exiting from the loading zone.

In this way, the portion of chain 30 that enters the punching zone 8 exhibits overlapped rows of transport seats 34 seating overlapped rows of semi-finished elements.

The semi-finished elements are easily inserted in the transport seats 34 of chain 30, since the pushing element 40 of the locking means is kept lowered by projection 50 of the release means, thus leaving free access to the transport seats 34.

Out of the loading zone, the pushing element 40, not influenced by projection 50 anymore, lifts and pushes the semi-finished elements seated in the transport seats 34 against the walls of said modules 32 of chain 30, thus retaining them into position.

The elements loaded on chain 30 pass through the punching zone.

Preferably, said elements are heated in said heating station 52, for example by a hot air jet.

Afterwards, the semi-finished elements are punched by the pairs of opposite punches. Preferably, a hot punching is followed by a cold punching, for example for impressing a mark on the finished element.

The hot punching compresses the tangs of the semi-finished elements into the body, virtually making them disappear. Such process is called "healing".

Once out of the punching zone, the finished elements are carried by chain 30 to the unloading zone.

Here, a further projection influences the pushing element 40 so as to disengage the finished elements from the wall of the seats they are seated in.

Easily, therefore, the unloading means operate on said finished elements, unloading them from the chain.

Said finished elements are piled up, for example in a crate.

Innovatively, the orientation and transport device according to the present invention allows carrying out the punching at a high punching speed, by virtue of the arrangement on overlapped rows of the semi-finished elements and of the concurrent execution of the punching on several semi-finished elements.

Advantageously, despite the high number of punches that can be carried out at the same time, the overall dimensions of the apparatus is limited, since the overlapped rows allow working several elements, but arranged at different heights, at the same time. In other words, the number of punches that can be carried out at the same time being equal, it is possible to make a shorter apparatus, as the apparatus itself has a "height" development.

It is clear that a man skilled in the art can make several changes and variations to the apparatus described above in order to meet specific and incidental needs.

According to an embodiment variation, said orientation and transport device comprises more than two cylinders side by side and correspondingly, said chain exhibits more than two overlapped rows.

According to a further embodiment variation, said punching device comprises a plurality of hot air blowing stations, a plurality of hot punching stations and a plurality of cold punching stations.

It is clear that also such variations are to be intended as falling within the scope of protection as defined by the following claims.

## Claims

1. Orientation and transport device (2) of an apparatus for picking up and punching (1) semi-finished elements, wherein said device (2) is associable:
- to a feeding device (4), upstream of said orientation and transport device (2), suitable for feeding said orientation and transport device (2) with an aligned array of semi-finished elements parallel to each other, arranged aligned according to a first direction of orientation (X-X),
- and to a punching device (6), downstream of said orientation and transport device (2), suitable for carrying out a punching of said semi-finished elements for obtaining finished elements, said punching device (6) exhibiting a punching zone (8) for carrying out said punching;
wherein said orientation and transport device (2) comprises
- orientation means suitable for seating said aligned array according to said first direction of orientation (X-X) and suitable for orientating said aligned array according to a second direction of orientation (Y-Y), obtaining an oriented array of semi-finished elements;
- transport means suitable for seating said oriented array and suitable for transporting said oriented array to said punching zone (8);
said orientation and transport device (2) being
**characterised in that**
said orientation means are suitable for separating said aligned array into a first row (F1) of aligned elements and a second row (F2) of aligned elements arranged at different heights relative to a reference plane, for feeding said oriented array into overlapped rows to said transport means.

2. Orientation and transport device according to claim 1, wherein said orientation means are suitable for rotating said aligned array for orientating said semi-finished elements according to said second direction of orientation (Y-Y).

3. Orientation and transport device according to claim 2, wherein said orientation means are suitable for rotating according to a single direction of rotation.

4. Orientation and transport device according to claim 2, wherein said orientation means are suitable for rotating alternately in clockwise and counter clockwise direction.

5. Orientation and transport device according to any one of claims 2 to 4, wherein said orientation means comprise
- a first cylinder (10) having a first rotation axis (Z-Z) and a first row of seats suitable for seating said semi-finished elements in abutment with a seat bottom (14), and
- a second cylinder (16) having a second rotation axis (W-W) and a second row of seats suitable for seating said semi-finished elements in abutment with a seat bottom (20),
wherein said cylinders (10, 16) are suitable for switching from a loading configuration, wherein they cooperate with the feeding device for receiving said aligned array, to an unloading configuration, wherein they cooperate with said transport means for feeding said oriented array to said transport means,
in said loading configuration, said seat bottoms (14, 20) of the first row of seats and said seat bottoms of the second row of seats being arranged at different heights relative to said reference plane.

6. Orientation and transport device according to any one of the previous claims, wherein said transport means, proceeding from said orientation means towards said punching zone (8), define an advance direction (F-F), and
wherein said orientation means are suitable for separating said aligned array in said first row (F1) of aligned elements and in said second row (F2) of aligned elements arranged side by side along said advance direction (F-F).

7. Orientation and transport device according to claim 5 and 6, wherein said first cylinder (10) and said second cylinder (16) are side by side along said advance direction (F-F).

8. Orientation and transport device according to any one of the previous claims, further comprising pushing means suitable for cooperating with said orientation means for feeding said oriented array to said transport means.

9. Device according to any one of the previous claims,
wherein said transport means comprise a closed chain (30) for carrying the semi-finished elements from a loading zone, wherein said transport means cooperate with said orientation means, to said punching zone(8), wherein said closed chain (30) comprises a plurality of modules (32) suitable for seating said semi-finished elements and
wherein each module (32) exhibits a plurality of transport seats (34) organised into overlapped rows relative to said reference plane.

10. Orientation and transport device according to claim 9, wherein said transport seats (34) are holes through said modules of the chain (30), said holes exhibiting respective hole axes parallel, in said loading zone, with said second direction (Y-Y) of the oriented array.

11. Orientation and transport device according to any one of the previous claims, wherein said transport means further comprise locking means suitable for retaining said semi-finished elements.

12. Orientation and transport device according to claim 9 and 11, wherein said locking means comprise a pushing element (40), arranged in each module of the chain (30), constantly influenced for pushing said semi-finished element seated in said module (32) against the wall of said module (32), for retaining it.

13. Device according to claim 11 or 12, wherein said transport means comprise release means suitable for deactivating said locking means, for allowing the seating of said oriented array into said transport means.

14. Orientation and transport device according to claim 12 and 13, wherein said release means comprise a fixed abutment (50), at least partly arranged into said loading zone, suitable for influencing said pushing element (40) for freeing access of the semi-finished element to said transport seats (34).

15. Orientation and transport device according to any one of the previous claims, further comprising ejection means suitable for cooperating with said transport means for ejecting said finished elements, said ejection means cooperating with said transport means in an ejection zone.

16. Orientation and transport device according to claim 11 and 15, wherein said transport means further comprise second release means, suitable for cooperating with said transport means in said ejection zone and suitable for deactivating said locking means, for allowing the ejection of said finished elements.

17. Orientation and transport device according to claim 12 and 16, wherein said second release means comprise a fixed abutment, at least partly arranged into said ejection zone (50), suitable for influencing said pushing element for disengaging said finished element from said transport seats (34).

18. Apparatus for picking up and punching semi-finished elements comprising:
- an orientation and transport device (2) made according to any one of the previous claims;
- a feeding device (4), upstream of said orientation and transport device (2), suitable for feeding said orientation and transport device with an aligned array of semi-finished elements parallel to each other, arranged aligned according to a first direction of orientation (X-X);
- a punching device (6), downstream of said orientation and transport device, suitable for carrying out a punching of said semi-finished elements for obtaining finished elements, said punching device (6) exhibiting a punching zone (8) for carrying out said punching.

19. Apparatus according to claim 18, wherein said punching device comprises at least one heating station (52), for heating said semi-finished elements, and at least one punching station (60).

20. Apparatus according to claim 19, wherein said heating station (52) is upstream of said punching station (60).

21. Apparatus according to claim 19 or 20, wherein said punching station (60) comprises at least one pair of opposite pistons, between which said transport means are arranged.

22. Apparatus according to claim 21, wherein said pistons are heated.

23. Apparatus according to claim 21, wherein said pistons are cooled.

24. Apparatus according to any one of claims 18 to 23,
wherein said feeding device (4) comprises
- a container for containing said semi-finished elements in bulk;
- lifting means for lifting said elements in bulk up to a predetermined height;
- separation means for separating said elements in bulk into single elements;
- feeding means of said single elements to said orientation means of the orientation and transport device;
wherein said feeding means comprise a plurality of pipes (74) suitable for feeding said single semi-finished elements to said orientation means according to said first direction of orientation (X-X).

25. Orientation and transport method that can be carried out with the device according to claims 1 to 17.
